# DEMANDE DE BREVET EUROPEEN

(11) **EP 1 679 853 A1**
(43) Date de publication de la demande: **12.07.2006**
(21) Numéro de dépôt: 06290018.8
(22) Date de dépôt: 05.01.2006
(51) Int. Cl.: H04L 29/06, H04L 12/22

(54) **Procédé de téléchargement de données à partir d'une borne de téléchargement**

(30) Priorité: 07.01.2005 FR 0500187
(71) Demandeur: Société ALPARFI, 75016 Paris (FR)
(72) Inventeur: Stellittano, Jean, 91790 Boissy sous Saint Yon (FR)
(74) Mandataire: Wagret, Frédéric

(57) **Abrégé**

La présente invention concerne un procédé de téléchargement de données à partir d'une borne de téléchargement (2), caractérisé en ce qu'il comprend l'étape de téléchargement de titres musicaux à partir de ladite borne (2) disposée dans un lieu public, le procédé comprenant l'échange de données entre au moins une borne de téléchargement (2), un serveur proxy (3) et un serveur de paiement (4).

Plus précisément, le procédé comprend les étapes de :
- Sélection des données à télécharger ;
- Validation de la sélection du client ;
- Sélection du support du téléchargement et/ou de son modèle ;
- Connexion du support de téléchargement avec la borne ;
- Détection du support de téléchargement par la borne ;
- Paiement des données téléchargées par le client.
- Transfert des données vers le support de téléchargement

## Description

La présente invention concerne un procédé de téléchargement de données à partir d'une borne de téléchargement.

Les procédés de téléchargement de données à partir d'une interface ordinateur sont connus et permettent notamment de choisir et consulter à l'avance les oeuvres que l'utilisateur souhaite télécharger, rechercher des renseignements supplémentaires sur cette oeuvre et payer de manière sécurisée le téléchargement.

Il est connu selon l'art antérieur de pouvoir télécharger des données, par exemple des titres musicaux, à partir d'une interface utilisateur en se connectant de chez soi sur Internet par l'intermédiaire d'un ordinateur personnel.

Il est ensuite nécessaire d'aller sur un site Internet permettant de tels téléchargement, de les payer en donnant son numéro de carte bancaire puis de stocker, en général sur son disque dur, les données téléchargées.

De plus, ces procédés de téléchargement reposent sur l'exploitation d'un site Internet et les titres téléchargés le sont exclusivement sur l'ordinateur personnel ou sur des périphériques de mémoire interne, par exemple le disque dur de l'ordinateur dans la majorité des cas.

Il serait intéressant de réaliser des dispositifs permettant le téléchargement d'oeuvres de l'esprit, notamment des titres musicaux et ce sans les contingences liées aux matériels nécessaires pour permettre un tel téléchargement, notamment du fait de l'encombrement de ces matériels.

Ainsi, il serait intéressant de réaliser un dispositif suffisamment versatile permettant le téléchargement sur tout type de support.

Il doit être également réalisé des moyens de téléchargement sécurisés permettant la prévention et la réparation d'interventions malveillantes ou accidentelles par des utilisateurs dans le système informatique des moyens de téléchargement.

La présente invention se propose de résoudre ce problème à l'aide d'un procédé de téléchargement simple, facilement manipulable et paramétrable et sécurisé à partir d'une borne de téléchargement.

Pour ce faire, la présente invention concerne un procédé de téléchargement de données, à partir d'une borne de téléchargement, comprenant l'étape de téléchargement de données à partir de ladite borne disposée dans un lieu public et comprenant des échanges de données entre au moins une borne de téléchargement, un serveur proxy et un serveur de paiement.

De manière avantageuse, le procédé comprend les étapes de :
- Sélection des données à télécharger ;
- Validation de la sélection du client ;
- Sélection du support du téléchargement et/ou de son modèle ;
- Insertion du support de téléchargement et connexion du support de téléchargement avec la borne ;
- Détection du support de téléchargement par la borne ;
- Paiement des données téléchargées par le client.
- Transfert des données vers le support de téléchargement

De manière plus précise et avantageuse, les données téléchargées sont des titres musicaux et le support de téléchargement est une carte ou clé USB (marque déposée), un appareil du type PDA, un ordinateur portable, un baladeur numérique ou une carte mémoire et autres périphériques.

Avantageusement, le procédé est réalisé à partir d'un serveur proxy comprenant un serveur de paiement, un serveur de stockage des données, un serveur de gestion des licences associées aux données, un serveur de gestion des courriels et un serveur http et un serveur FTP.

Afin de permettre le paiement des données téléchargées, celui-ci est réalisé soit à l'aide d'une carte bancaire, soit à l'aide d'une carte prépayée.

Afin de permettre la protection des données téléchargées, un module de gestion des droits numériques ou module DRM (« Digital Right Management ») est associé au système d'exploitation de la borne, le module DRM étant apte à télécharger lesdites données à partir dudit serveur de stockage sur ledit serveur proxy et les licences à partir dudit serveur de gestion des licences.

Afin de sécuriser les échanges de données, les échanges de données sont réalisés au moyen d'une connexion sécurisée de type VPN ou Virtual Private Network.

Afin de permettre une compréhension totale de l'invention, celle-ci est maintenant décrite à l'aide d'exemples uniquement illustratifs et nullement limitatifs de la portée de l'invention et à partir des figures ci-jointes où :
- La figure 1 représente une vue schématique de la borne selon l'invention et des différents éléments physiques interagissant avec ;
- La figure 2 représente un diagramme schématique des étapes du procédé de téléchargement selon l'invention.

Le procédé selon la présente invention comprend des moyens de téléchargement 1 sous la forme d'une borne de téléchargement 2.

Avantageusement, la borne de téléchargement 2 se compose d'une unité centrale de type PC avec un processeur de type Intel Pentium 4 (marque déposée).

Toutefois, l'unité centrale de la borne 2 selon l'invention est apte à fonctionner avec tout type de processeur.

De plus, un écran tactile, de 12 ou 15 pouces, est relié à l'unité centrale.

Il est néanmoins envisageable de relier l'unité centrale à un écran non tactile de type connu en soi et à un clavier et une souris.

Afin de permettre aux utilisateurs de la borne 2 de se connecter au réseau Internet et de stocker les données téléchargées, la borne 2 comprend des moyens de connexion à un support de téléchargement sous la forme d'un hub de lecteur de cartes mémoire compatible, notamment, au format SmartMédia (SD) (marque déposée), MultimédiaMemoryCard (MMC) (marque déposée), CompactFlash (marque déposée), MemoryCard (marque déposée) et MemoryStick (marques déposée).

Il est également prévu sur la borne 2 : deux ports USB, des prises IE 1394, un port infrarouge, un port Bluetooth (marque déposée), une carte réseau LAN 100 mbs, une carte réseau sans-fil wi-fi (marque déposée) et un lecteur de carte magnétique. A noter que la carte LAN n'intervient pas dans la connexion des périphériques, mais uniquement dans l'accès au réseau.

Il est également prévu de relier la borne 2 à des moyens de paiement, par exemple sous la forme d'un boîtier de lecture de cartes bancaires et de cartes à puces prépayées équipé d'un clavier numérique, ces équipements étant tous de type connus en soi et couramment disponibles dans le commerce.

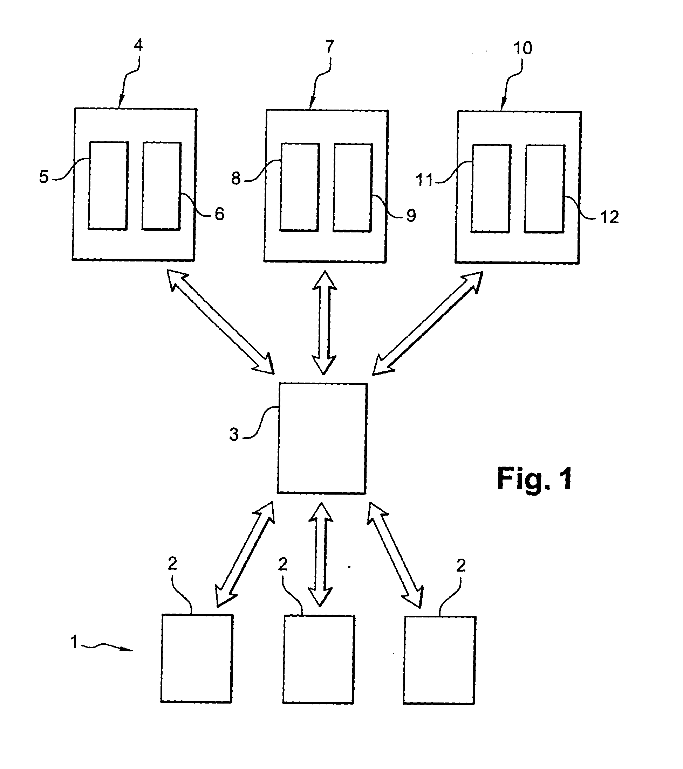

La figure 1 représente une vue schématique des différents éléments interagissant avec les moyens de téléchargement 1 sous la forme d'une borne de téléchargement 2.

De manière avantageuse, l'unité centrale de la borne ainsi que ses périphériques associés sont gérés par un système d'exploitation du type Microsoft Windows (marque déposée).

Il est utilisé un navigateur Internet sur la borne 2 apte à exploiter les fonctionnalités de l'applicatif Internet Explorer présent dans le système d'exploitation Microsoft Windows (marque déposée), ce Navigateur Internet étant avantageusement sécurisé.

Afin de permettre l'accès à un plus grand nombre, les bornes 2 selon l'invention sont disposées dans un lieu public.

Le procédé selon l'invention porte sur l'échange de données à partir de la borne 2, et de manière plus précise sur l'achat et le téléchargement de titres de chansons ou de clips vidéo sur un support de téléchargement ou des moyens de stockage personnels tels qu'une carte ou clé USB, un PDA ou assistant numérique personnel, un ordinateur de poche ou PALM, SMARTPHONE (marque déposée), POCKET PC (marque déposée), un ordinateur portable ou un baladeur numérique, par exemple, la borne 2 présentant tout un ensemble de connectiques appropriés pour relier ces moyens de stockage personnels à la borne 2.

Il est ainsi possible, grâce au procédé selon l'invention, d'acheter des titres musicaux dans des lieux publics, à des coûts avantageux et de les télécharger sur un support de stockage ou des moyens de stockage personnel.

Le téléchargement se fait à partir d'un site Internet de vente en ligne d'un ou plusieurs titres.

Le procédé selon l'invention comprend donc l'étape de téléchargement de titres musicaux à partir d'une borne disposée dans un lieu public.

Pour ce faire, il est possible de prévoir un abonnement mensuel ou annuel pour le téléchargement d'une quantité prédéterminée de titres.

Le paiement du téléchargement des données se fait, soit à l'aide d'une carte bancaire, soit à l'aide d'une carte de prépaiement pouvant être directement achetée chez un commerçant, soit par commande à distance sur Internet à un prix public défini.

Dans ce but, la borne est reliée à un lecteur de carte bancaire ou de carte prépayée de type connu en soi.

Il est également prévu des écouteurs, de type connu en soi, des titres dont l'utilisateur envisage le téléchargement.

De manière supplémentaire, l'utilisateur peut visualiser des clips vidéos qu'il souhaiterait télécharger.

Les bornes 2 selon l'invention sont reliées individuellement et collectivement à au moins un serveur proxy 3, de type connu en soi.

Le serveur proxy 3, aussi appelé serveur mandataire, a pour fonction de servir d'intermédiaire entre les bornes 2 et les serveurs externes, notamment les serveurs de diffusion.

De manière plus précise, le serveur proxy 3 selon l'invention est connecté à un serveur de paiement 4 constitué d'un serveur de paiement pour des cartes bancaires 5 et d'un serveur de paiement pour des cartes prépayées 6.

Le serveur proxy 3 comprend également un serveur FTP, de type connu en soi, apte à télécharger des données d'un serveur de diffusion 7 constitué d'un serveur de gestion de licence des données 8 et d'un serveur de stockage des données 9.

Le serveur de gestion de licence de données 8 délivre les licences sur les données avec un accès sécurisé et crypté et le serveur de stockage des données délivre les titres protégés.

Le serveur proxy 3 comprend également un serveur dédié 10 constitué d'un serveur de gestion des courriels 11 et d'un serveur http 12.

Avantageusement, les données téléchargées et échangées sont des oeuvres musicales sous forme numérique.

Le serveur proxy 3 a pour fonctions principales de :
- Parefeu (firewall), car les informations relatives au paiement transitent par le serveur proxy 3 ;
- Mémoriser les données les plus fréquemment téléchargées ;
- Mémoriser les pages de l'interface de navigation ;

De cette manière, le procédé de téléchargement de données, qui sera explicité ultérieurement, est optimisé par la minimisation de l'encombrement du réseau.

Afin de résoudre le problème lié au déploiement et au suivi de la pluralité des bornes de téléchargement 2, l'interface de navigation, accessible depuis la borne 2, n'est pas hébergée de manière locale sur la borne 2 mais sur le serveur web distant dédié http 12, accessible via un réseau du type VPN par le navigateur, l'interface se trouvant sur le serveur http 12 et une copie de l'interface sur le serveur proxy 3.

L'utilisateur de la borne 2 accède à l'interface sur le serveur proxy 3 qui met à jour régulièrement l'interface à partir du serveur http 12.

De cette façon, toute modification effectuée sur l'interface à partir du serveur http 12 est répercutée sur l'ensemble des bornes 2 connectées au serveur proxy 3.

Avantageusement, l'interface de navigation est développée au moyen du compilateur du type Flash (marque déposée).

Avantageusement, le navigateur permet à l'utilisateur de naviguer sur l'interface hébergée par le serveur http 12 mais interdit l'accès aux fichiers hébergés localement par la borne 2 et au bureau de Microsoft Windows (marque déposée).

De cette manière, il est répondu de manière satisfaisante aux problèmes de sécurité et d'intégrité du système posé par l'implantation des bornes 2 dans des lieux publics.

De plus, afin de sécuriser l'ensemble des échanges de données entre les différents serveurs et la borne 2, les échanges sont réalisés par Internet au moyen d'une connexion sécurisée du type VPN ou réseau privé virtuel (« Virtual Private Network »).

Les routeurs de type CISCO assurent l'établissement des connexions au réseau VPN.

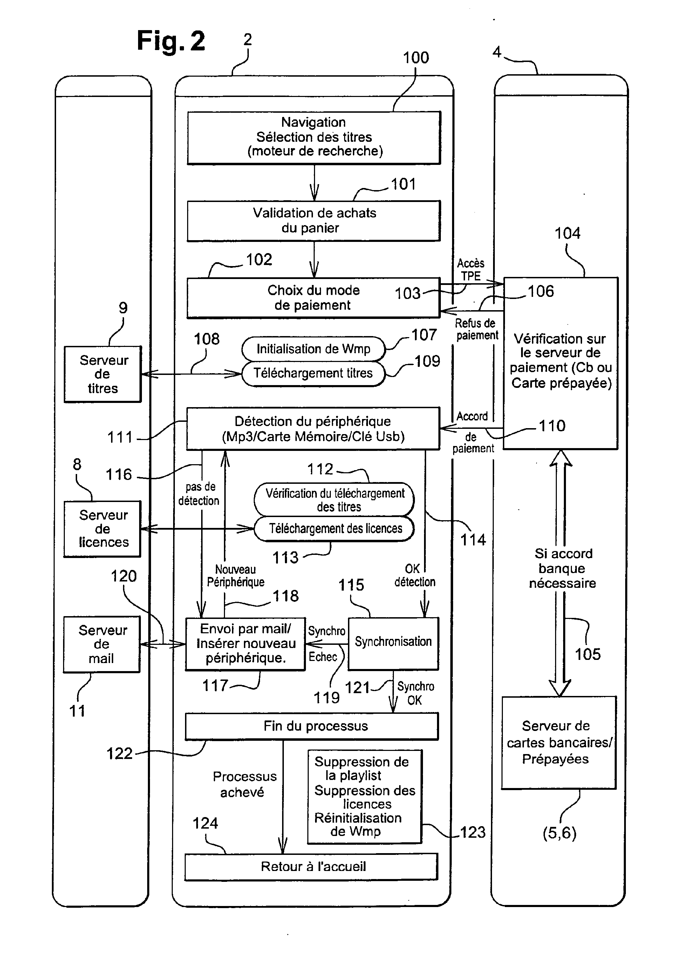

La figure 2 représente un diagramme schématique des étapes du procédé de téléchargement selon l'invention.

L'utilisateur de la borne 2 selon l'invention doit, dans un premier temps naviguer sur l'interface de navigation accessible depuis la borne 2 et sélectionner les données ou titres musicaux qu'il souhaite télécharger (étape 100).

Les données téléchargées sont ensuite stockées de manière temporaire dans un panier, l'utilisateur pouvant alors soit rajouter des titres dans le panier, soit en retirer, soit vérifier le contenu de son panier.

Une fois que l'utilisateur a choisi l'ensemble des titres à télécharger, il doit alors valider les titres contenus dans le panier (étape 101).

Il doit ensuite procéder au paiement des titres à télécharger en choisissant tout d'abord son mode de paiement (étape 102), c'est-à-dire en payant soit par carte bancaire, soit par carte prépayée.

De plus, en parallèle, lors de la validation du panier (étape 101), le logiciel Windows Media Player (WMP) 10.0 (marque déposée), présent sur la borne 2, est initialisé.

Cette opération d'initialisation est réalisée sur un module de gestion des droits numériques ou module dit DRM (« Digital Right Management »), la technologie DRM étant un procédé consistant à associer à un fichier multimédia, lisible exclusivement par un type de progiciel de lecture, des informations permettant d'indiquer à la machine utilisée pour son stockage si l'utilisateur bénéficie effectivement des droits d'écoute et de reproduction du fichier multimédia.

Le module DRM selon l'invention a été avantageusement écrit dans le langage C++ et accède de manière programmatique aux services offerts par Windows Media Player (marque déposée), en manipulant les méthodes offertes par le kit de développement Windows Media SDK Components (marque déposée).

Il est bien entendu que le procédé selon l'invention est également applicable à tout type de logiciel effectuant les mêmes fonctions que le logiciel WMP et sur tout type de version de WMP, même si la version décrite du procédé utilise plus particulièrement la version 10.0 du logiciel Windows Media Player (marque déposée). Une version de l'invention offre : le contrôle programmatique du lecteur, la synchronisation et la préécoute en flux continu des titres. Le procédé de l'invention pourrait être transposé à d'autres types de lecteurs. En ce cas, seul les standards de programmation seraient susceptibles de changer, l'algorithme restant sensiblement le même.

Lors de l'étape du choix de mode de paiement (étape 102), l'utilisateur doit choisir s'il désire payer par carte bancaire ou par carte prépayée.

L'utilisateur accède ensuite au Terminal de Paiement Electronique (TPE) (étape 103) après avoir inséré sa carte bancaire ou sa carte prépayée, et tape ensuite éventuellement un code secret sur un terminal de lecture de cartes bancaires relié à un clavier numéroté, de type connu en soi.

Le serveur proxy 3 se connecte alors au serveur bancaire 4 pour vérifier si l'utilisateur a accès au serveur de paiement des cartes bancaires 5 ou au serveur de paiement des cartes prépayées 6 (étape 104).

Si un accord bancaire est nécessaire, alors une connexion directe est établie sur le serveur de paiement des cartes bancaires 5. Si un accord bancaire n'est pas nécessaire, la connexion est établie sur le serveur de paiement des cartes prépayées 6 (étape 105).

Dans le cas où le paiement est refusé (étape 106), par exemple pour manque de crédit argent sur la carte prépayée, alors l'utilisateur a plusieurs possibilités : soit utiliser un nouveau mode de paiement, soit recommencer l'opération, soit arrêter la navigation sur la borne 2.

Le processus de paiement est donc du type couramment utilisé chez les commerçants et correspond donc à un dialogue entre la borne 2, sur laquelle l'utilisateur navigue, et le serveur de paiement 4 par l'intermédiaire du serveur proxy 3. A noter qu'en cas de paiement par carte prépayée, les serveurs bancaires n'interviennent pas.

Avantageusement, la borne 2 est reliée au serveur de paiement 4 par le serveur proxy 3, c'est-à-dire par une adresse IP et non par une connexion RS232.

Par ailleurs, lors de la validation du choix du panier (étape 101), la borne 3 a initialisé Windows Media Player WMP (étape 107) à l'aide du module DRM.

De même, lors de cette même étape 101 de validation, la borne 2 s'est connectée, par l'intermédiaire du serveur proxy 3 au serveur de diffusion 7, et plus précisément au serveur de stockage des titres numérisés 9 (étape 108), et ce seulement dans le cas où le Titre ne se trouve pas sur le serveur proxy.

Les données validées dans le panier lors de l'étape 101 sont ainsi téléchargées sur le serveur proxy 3 (étape 109) à l'aide du module DRM de la borne 3.

Une fois l'accord de paiement obtenu du serveur de paiement 4 (étape 110), l'utilisateur est alors invité à insérer son support de téléchargement dans le port correspondant, la borne tentant alors de détecter le support de téléchargement (étape 111).

Il a été vu précédemment à quoi pouvait correspondre un support de téléchargement ou des moyens de stockage personnels.

Une fois que le paiement a été accepté, le module DRM vérifie si les données commandées ont bien été téléchargées (étape 112).

Dans le cas d'une réponse positive, le module DRM télécharge les licences correspondantes (étape 113) à partir du serveur de gestion des licences 8.

Lors de l'étape de détection du périphérique de stockage (étape 111), si la borne 3, et plus précisément son module DRM, détecte le périphérique de stockage (étape 114), alors le module DRM débute l'étape de synchronisation des titres téléchargés (étape 115), c'est-à-dire qu'il y a la création d'une liste de titres et leur transfert sur le périphérique de stockage.

De manière plus précise, l'étape de synchronisation 115 consiste à copier des fichiers multimédia protégés par une DRM sur un périphérique de stockage et de lecture portable, tout en y associant les droits dont dispose l'utilisateur sur la consultation et la reproduction de l'oeuvre.

De manière supplémentaire, le module DRM de la borne 3, après avoir téléchargé les titres (étape 109) et les licences (étape 113) supprime de manière définitive les titres et les licences ayant transité par la borne 3, de manière telle que celle-ci soit protégée contre le piratage.

En cas de non-détection par la borne 3 d'un périphérique de stockage (étape 116) ou en cas d'échec de l'étape 115 de synchronisation (étape 119), il est proposé à l'utilisateur, soit d'insérer un nouveau périphérique de stockage, soit d'envoyer les titres téléchargés par courrier électronique, l'utilisateur devant alors inscrire une adresse e-mail (étape 117) et un courriel est envoyé à cette adresse par l'intermédiaire du serveur de gestion des courriels (étape 120), le courriel envoyé contenant avantageusement un lien de téléchargement avec un code d'accès.

Si l'utilisateur insère un nouveau périphérique (étape 118), alors l'étape de détection du périphérique (étape 111) est recommencée.

Si l'étape de synchronisation 115 s'est déroulée jusqu'à son terme (étape 121), alors le procédé de téléchargement est terminé (étape 122), le module DRM supprime la liste des titres téléchargés (Playlist), les licences et réinitialise WMP (étape 123), et la borne 3 propose le menu d'accueil à l'utilisateur (étape 124).

De manière avantageuse, le procédé comprend les étapes de :
- Sélection des données à télécharger ;
- Validation de la sélection du client ;
- Insertion du support de téléchargement et sélection du support du téléchargement et/ou de son modèle ;
- Connexion du support de téléchargement avec la borne ;
- Détection du support de téléchargement par la borne ;
- Paiement des données téléchargées par le client.
- Transfert des données vers le support de téléchargement

La présente invention consiste donc en un procédé de téléchargement permettant à un utilisateur, à partir d'une borne de téléchargement disposée dans un lieu public, de :
- rechercher de manière interactive des oeuvres musicales ou audiovisuelles parmi un catalogue disponible ;
- consulter et obtenir in situ un aperçu partiel sur des informations complémentaires sur ces oeuvres, notamment sur leurs auteurs ;
- télécharger les oeuvres sélectionnées vers tout type de périphérique de stockage amovible couramment disponible dans le commerce, sous la forme de fichiers numériques autorisant un nombre limité de reproductions ultérieures, et permettant ainsi d'éviter de contribuer, dans la mesure du possible, au piratage, et
- s'acquitter, à l'aide de moyens de paiement sécurisés, du prix de reproduction de l'oeuvre et la licence.

De plus, en cas d'inactivité de la borne de téléchargement 2, il est prévu qu'un écran de veille diffuse des messages publicitaires.

Dans toute la description, il est entendu par « lieu public » tout endroit accessible librement à toute personne, notamment sans restriction ni contrepartie financière, ces endroits ou zones étant destinés à un usage commercial ou d'activités, et à titre d'exemple les magasins, grandes surfaces, gares, aéroports, ports, etc....

## Revendications

1. Procédé de téléchargement de données depuis l'Internet sur un support de stockage de données, à partir d'une borne de téléchargement (2), **caractérisé en ce que** l'on télécharge lesdites données directement par connexion dudit support sur ladite borne, fixe et disposée dans un lieu public.

2. Procédé selon la revendication 1, **caractérisé en ce que** le téléchargement est réalisé par l'intermédiaire d'un serveur proxy (3) et d'un serveur de paiement (4).

3. Procédé selon la revendication 1 ou 2, **caractérisé en ce qu'**il comprend les étapes de :
• Sélection des données à télécharger ;
• Validation de la sélection du client ;
• Sélection du support du téléchargement et/ou de son modèle ;
• Insertion du support de téléchargement et connexion du support de téléchargement avec la borne ;
• Détection du support de téléchargement par la borne ;
• Paiement des données téléchargées par le client.
• Transfert des données vers le support de téléchargement

4. Procédé selon l'une des revendications précédentes, **caractérisé en ce que** lesdites données téléchargées sont des titres musicaux.

5. Procédé selon l'une des revendications 3 ou 4, **caractérisé en ce que** ledit support de téléchargement est une clé USB, un PDA ou assistant numérique personnel, un ordinateur de poche ou PALM, SMARTPHONE (marque déposée), POCKET PC (marque déposée), un ordinateur portable ou un baladeur numérique.

6. Procédé selon l'une des revendications précédentes, **caractérisé en ce qu'**il est réalisé à partir d'un serveur proxy (3) comprenant un serveur de paiement (5), un serveur de stockage des données (8), un serveur de gestion des courriels (11) un serveur http (12) et un serveur FTP, et par ailleurs d'un serveur de diffusion comprenant un serveur de stockage et un serveur de gestion des licences associées aux données (9).

7. Procédé selon l'une des revendications précédentes, **caractérisé en ce que** le paiement des données téléchargées est réalisé soit à l'aide d'une carte bancaire, soit à l'aide d'une carte prépayée.

8. Procédé selon l'une des revendications précédentes, **caractérisé en ce qu'**un module de gestion des droits numériques ou module DRM (« Digital Right Management ») est associé au système d'exploitation de ladite borne (2).

9. Procédé selon la revendication 8, **caractérisé en ce que** ledit module DRM est apte à télécharger lesdites données à partir dudit serveur de stockage (9) sur ledit serveur proxy (3) et les licences à partir dudit serveur de gestion des licences (8).

10. Dispositif pour la mise en oeuvre du procédé selon l'une des revendications précédentes, permettant de téléchargement de données depuis l'Internet sur un support de stockage de données, à partir d'une borne de téléchargement (2), comportant des moyens de connexion dudit support sur ladite borne, fixe et disposée dans un lieu public.), un serveur proxy (3) et un serveur de paiement (4).
